# EUROPEAN PATENT APPLICATION

(11) **EP 3 543 040 A1**
(43) Date of publication of application: **25.09.2019**
(21) Application number: 17871687.4
(22) Date of filing: 21.11.2017
(51) Int. Cl.: B60C 19/00, B60B 9/04, B60B 21/00, B60C 7/18

(54) **NON-PNEUMATIC TIRE AND TWO-WHEELED VEHICLE**

(30) Priority: 21.11.2016 JP 2016226183
(71) Applicant: Bridgestone Corporation, Tokyo 104-8340 (JP)
(72) Inventor: ABE, Akihiko, Tokyo 104-8340 (JP); SATOU, Hiroshi, Tokyo 104-8340 (JP); SHOJI, Takanori, Tokyo 104-8340 (JP); NISHIDA, Masashi, Tokyo 104-8340 (JP); KAWANO, Mitsunobu, Ageo-shi Saitama 362-8520 (JP); KATO, Takahiko, Ageo-shi Saitama 362-8520 (JP)
(74) Representative: Oxley, Robin John George
(86) International application number: PCT/JP2017/041818
(87) International publication number: WO 2018/092912

(57) **Abstract**

The present invention provides a non-pneumatic tire including an inner tube (6) attachable to an axle (15a), an outer tube (4) configured to surround the inner tube from an outer side in a tire radial direction, and an elastically deformable connecting member (3) configured to connect the inner tube and the outer tube to each other, the non-pneumatic tire including at least one of a detection section configured to detect occurrences of scratching, damage, or deterioration in the non-pneumatic tire; and a reporting section (33) configured to report occurrences of scratching, damage, or deterioration in the non-pneumatic tire.

## Description

### [Technical Field]

The present invention relates to a non-pneumatic tire and a two-wheeled vehicle.

Priority is claimed on Japanese Patent Application No. 2016-226183, filed November 21, 2016, the content of which is incorporated herein by reference.

### [Background Art]

In the related art, a non-pneumatic tire disclosed in Patent Document 1 is known. The non-pneumatic tire includes an inner tube, an outer tube, and an elastically deformable connecting member configured to connect the inner and outer tubes.

### [Citation List]

### [Patent Document]

### [Patent Document 1]

Japanese Unexamined Patent Application, First Publication No. 2015-609

### [Summary of Invention]

### [Technical Problem]

Incidentally, regardless of there being a pneumatic tire or a non-pneumatic tire, it is difficult for users or the like to notice problems such as a scratch, damage, deterioration, or the like, generated in a tire or a rim. For this reason, it is difficult to take measures to replace parts before a vehicle or the like becomes inoperable or to repair them in an initial state of a problem to extend a lifespan.

In consideration of the above-mentioned circumstances, the present invention is directed to allowing users or the like to notice problems such as a scratch, damage, deterioration, or the like, generated in a non-pneumatic tire easily.

### [Solution to Problem]

In order to solve the aforementioned problems, a non-pneumatic tire of the present invention includes an inner tube attachable to an axle, an outer tube configured to surround the inner tube from an outer side in a tire radial direction, and an elastically deformable connecting member configured to connect the inner tube and the outer tube to each other, the non-pneumatic tire including at least one of: a detection section configured to detect occurrences of scratching, damage, or deterioration in the non-pneumatic tire; and a reporting section configured to report occurrences of scratching, damage, or deterioration in the non-pneumatic tire.

According to the present invention, since occurrences of a scratching, damage, or deterioration in the non-pneumatic tire can be detected by the detection section and or can be reported by the reporting section, a user or the like can easily notice the occurrence. Accordingly, it is possible to take measures to replace parts before a bicycle is not able to travel or repair them in an initial stage of a trouble to extend a lifetime thereof.

Here, the reporting section may be a weakened section provided in a part of at least one of the inner tube, the outer tube and the connecting member, and having a lower strength than that of other areas.

In this case, for example, when degradation advances in the entire non-pneumatic tire, a state of the weakened section having small strength varies more significantly than a state of the other portion. Accordingly, when a state of the weakened section is recognized, a user or the like can precisely determine a level of degradation of the entire non-pneumatic tire including the other area. Accordingly, it is possible to more reliably take measures to replace parts before the vehicle or the like is not able to travel or repair them in an initial state of a trouble to extend a lifetime thereof.

### [Effects of Invention]

According to the present invention, it is possible for a user or the like to easily notice a trouble such as a scratch, damage, degradation, or the like, occurring in a non-pneumatic tire.

### [Brief Description of Drawings]

Fig. 1 is a side view of a bicycle including a non-pneumatic tire according to an embodiment.
Fig. 2 is an enlarged view of a non-pneumatic tire of a first embodiment.
Fig. 3 is an enlarged view of a non-pneumatic tire of a second embodiment.

### [Description of Embodiments]

### (First embodiment)

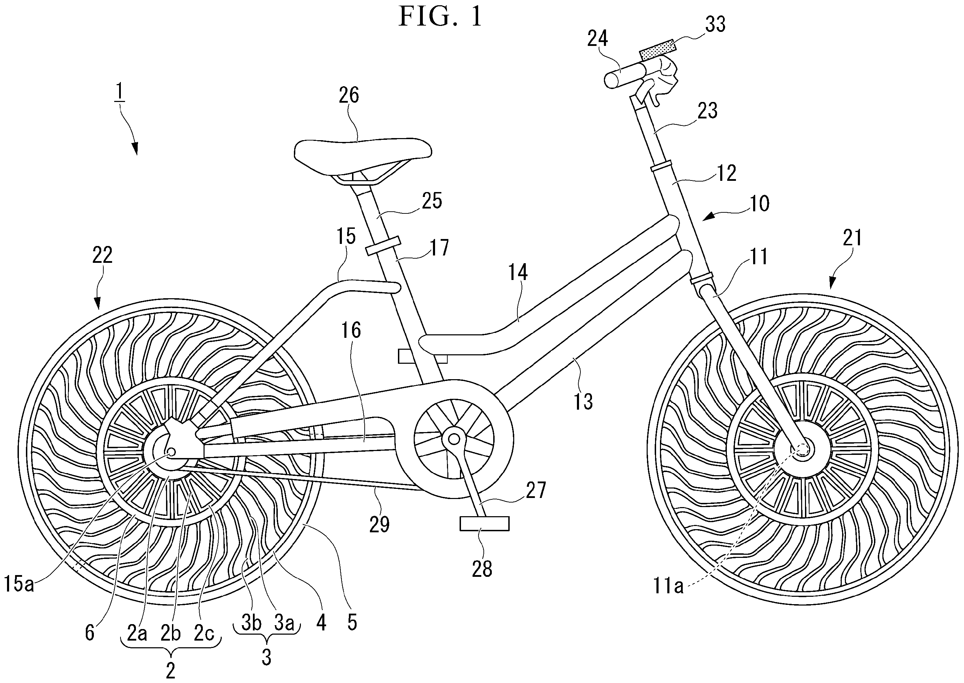

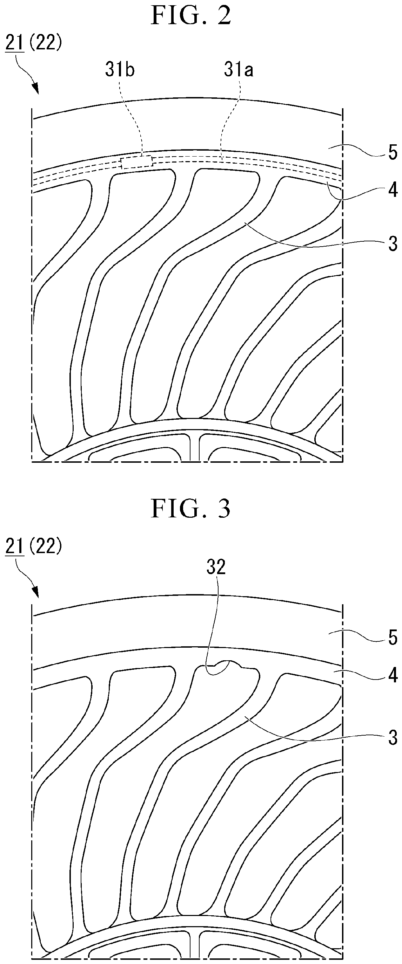

Hereinafter, a configuration of a non-pneumatic tire according to an embodiment will be described with reference to Figs. 1 and 2. Hereinafter, in the drawings used in the following description, the scales of components may be appropriately changed such that they are enlarged to recognizable sizes.

### (Vehicle body)

As shown in Fig. 1, the non-pneumatic tire of the embodiment is used as a front wheel 21 and a rear wheel 22 of a bicycle 1. The front wheel 21 and the rear wheel 22 are rotatably supported by a vehicle body 10 of the bicycle 1.

The vehicle body 10 includes a front fork 11, a head pipe 12, a down tube 13, a top tube 14, a seat tube 17, a seat stay 15, and a pair of chain stays 16.

The front wheel 21 rotates about an axle 11a disposed at a lower end portion of the front fork 11, and the rear wheel 22 rotates about an axle 15a disposed at a connecting section between the seat stay 15 and the chain stays 16.

Here, in the embodiment, when seen in a side view in a rotary axis direction of the rear wheel 22 (an axial direction of the axle 15a), a circumferential direction around the rotary shaft is referred to as a tire circumferential direction, a direction perpendicular to the rotary shaft is referred to as a tire radial direction, and a direction along the rotary shaft is referred to as a tire width direction.

The front fork 11 is disposed in front of the bicycle 1, and the head pipe 12 is connected to an upper end portion of the front fork 11. In addition, one end portion of the down tube 13 is connected to a rear side of the head pipe 12. Further, the top tube 14 is connected to a portion of the head pipe 12 immediately above an area to which the down tube 13 is connected.

The down tube 13 and the top tube 14 extend downward gradually going rearward. In addition, the seat tube 17 extends rearward gradually as it goes upward.

A front end portion of the seat stay 15 is connected to a rear side of an upper end portion of the seat tube 17. A rear end portion of the seat stay 15 and rear end portions of the chain stays 16 are connected to each other in the vicinity of the axle of the rear wheel 22.

A sprocket (not shown) (hereinafter, referred to as "a rear sprocket") is attached to the rear wheel 22 while being disposed coaxially with the rear wheel 22.

A handle stem 23 is inserted through the head pipe 12. The handle stem 23 is pivotable with respect to the head pipe 12. A handle 24 is attached to an upper end of the handle stem 23.

A seat post 25 is fitted into the seat tube 17. A saddle 26 is attached to an upper end of the seat post 25.

One end portion of a crank 27 is attached to a connecting section between a lower end portion of the seat tube 17 and front end portions of the chain stays 16 via a sprocket (not shown) (hereinafter, referred to as "a front sprocket"), and a pedal 28 is attached to the other end portion of the crank 27. The crank 27 is pivotable around a pivot shaft in a leftward/rightward direction. In addition, the pedal 28 is disposed at the other end portion of the crank 27, and is pivotable around a pivot shaft in the leftward/rightward direction. Further, the crank 27 and the pedal 28 are also provided on a left side of the bicycle 1. That is, the bicycle 1 includes the pair of cranks 27 and the pair of pedals 28.

A chain 29 is wound around the front sprocket and the rear sprocket. When a stepping force of a driver or the like is applied to the pedal 28, the front sprocket is rotated. Rotation of the front sprocket is transmitted to the rear sprocket via the chain 29 to rotate the rear sprocket, and the rear wheel 22 is rotated according to rotation of the rear sprocket.

### (Non-pneumatic tire)

The front wheel 21 and the rear wheel 22 have the same configuration as each other. Hereinafter, a configuration of the rear wheel 22 will be described as representative of the front wheel 21 and the rear wheel 22.

The rear wheel 22 includes an inner tube 6 attached to the axle 15a, an outer tube 4 configured to surround the inner tube 6 from an outer side in a tire radial direction, and elastically deformable connecting members 3 configured to connect the inner tube 6 and the outer tube 4 to each other. A tread member 5 is disposed on an outer circumferential surface of the outer tube 4.

The inner tube 6 is attached to the axle 15a via a wheel 2. Central axes of the inner tube 6 and the outer tube 4 are disposed coaxially with the axle 15a. The inner tube 6, the connecting members 3 and the outer tube 4 are disposed in the tire width direction in a state in which central sections thereof in the tire width direction coincide with each other.

The inner tube 6, the connecting members 3 and the outer tube 4 may be formed integrally with each other or may be formed separately from each other. In addition, the inner tube 6 and the wheel 2 may be formed integrally with each other or may be formed separately from each other.

The wheel 2 includes a mounting tube section 2a mounted rotatably with respect to the axle 15a, an exterior section 2c configured to surround the mounting tube section 2a from an outer side in the tire radial direction, and a plurality of ribs 2b configured to connect the mounting tube section 2a and the exterior section 2c to each other. The mounting tube section 2a, the plurality of ribs 2b and the exterior section 2c may be formed separately from each other or may be formed integrally with each other.

The mounting tube section 2a and the exterior section 2c are formed in a tubular shape and disposed coaxially with the axle 15a. For example, the plurality of ribs 2b are disposed at equal intervals in the tire circumferential direction. In the example shown, while the plurality of ribs 2b extend radially about the axle 15a, there is no limitation to the radial direction and, for example, the plurality of ribs 2b may extend in a tangential direction.

The connecting members 3 are formed in a rectangular plate shape curved as a whole when seen in the tire circumferential direction, front and back surfaces thereof are directed in the tire circumferential direction, and side surfaces thereof are directed in the tire width direction. The connecting members 3 are formed of an elastically deformable material such as a resin or the like, and relatively elastically displaceably connect an outer circumferential surface side of the inner tube 6 and an inner circumferential surface side of the outer tube 4. The plurality of connecting members 3 are disposed at equal intervals in the tire circumferential direction.

The plurality of connecting members 3 each has an inner side portion 3a connected to the inner tube 6, and an outer side portion 3b connected to the outer tube 4. The inner side portion 3a and the outer side portion 3b are connected to each other in a central section of the connecting member 3 in the tire radial direction, and intersect at an obtuse angle at the connecting section when seen in a side view. The thickness of the inner side portion 3a in the tire circumferential direction is smaller than the thickness of the outer side portion 3b in the tire circumferential direction. The thickness of the outer side portion 3b in the tire circumferential direction gradually increases as it goes outward in the tire radial direction.

The inner tube 6, the connecting members 3 and the outer tube 4 may be formed of, for example, a resin. The resin, for example, may be provided as only one resin, a mixture containing two or more resins, or a mixture containing one or more resins and one or more elastomers, and further, for example, may contain additives such as an antioxidant, a plasticizer, a filler, a pigment, or the like.

The tread member 5 is formed of, for example, a vulcanized rubber obtained by vulcanizing a natural rubber or/and a rubber composition, a thermoplastic material, or the like. As the thermoplastic material, a thermoplastic elastomer, a thermoplastic resin, or the like, is an exemplary example. As the thermoplastic elastomer, an amide-based thermoplastic elastomer (TPA), ester-based thermoplastic elastomer (TPC), olefin-based thermoplastic elastomer (TPO), styrene-based thermoplastic elastomer (TPS), urethane-based thermoplastic elastomer (TPU), thermoplastic rubber cross-linked body (TPV), or other thermoplastic elastomers (TPZ), which are defined in Japanese Industrial Standard JIS K6418, is an exemplary example.

As the thermoplastic resin, for example, urethane resin, olefin resin, vinyl chloride resin, polyamide resin, or the like, is an exemplary example. Further, in view of a wear resistance, the tread member 5 is preferably formed of a vulcanized rubber.

### (Detection section)

Here, as shown in Fig. 2, a metal wire 31a and a sensor 31b electrically connected to the metal wire 31a are buried in the outer tube 4 of the embodiment. The metal wire 31a is buried throughout the circumference of the outer tube 4. A weak current flows through the metal wire 31a, and a current value thereof is detected by the sensor 31b. Further, the sensor 31b is not limited to the case in which the sensor 31b is buried in the outer tube 4, and for example, may be joined to the outer tube 4 or other area.

When a scratch, damage, or degradation occurs in the outer tube 4, as a result of the outer tube 4 being deformed or broken in the circumferential direction, the metal wire 31a stretches or is cut in the circumferential direction. For this reason, the sensor 31b can detect the scratch, damage, or deterioration in the outer tube 4 on the basis of a variation in current value of the current flowing through the metal wire 31a. That is, the metal wire 31a and the sensor 31b serve as a detection section configured to detect the scratch, damage, or deterioration in the outer tube 4.

Further, the sensor 31b may detect the scratch, damage, or deterioration in the outer tube 4 on the basis of a variation in resistance value or voltage value of the metal wire 31a.

Further, the metal wire 31a and the sensor 31b are not limited to the example shown and may be buried in another area on the rear wheel 22. For example, the metal wire 31a may be buried in the connecting members 3, the inner tube 6, the wheel 2, and the like, and a current value or the like of the metal wire 31a may be detected by the sensor 31b. Accordingly, the scratch, damage, or deterioration in the place in which the metal wire 31a is buried can be detected.

### (Reporting section)

As shown in Fig. 1, a reporting section 33 is provided on the handle 24 of the embodiment. The reporting section 33 includes a lamp, a buzzer, and the like. When the above-mentioned detection section detects the scratch, damage, or deterioration in the rear wheel 22, a lamp of the reporting section 33 is turned on or a buzzer sounds. Accordingly, the reporting section 33 functions as a reporting section configured to report occurrences of scratching, damage, or deterioration in the rear wheel 22 to a user or the like.

Further, the reporting section 33 may be electrically connected to the detection section. Alternatively, the reporting section 33 and detection section may be connected to each other through wireless communication or the like.

As described above, according to the embodiment, since occurrences of scratching, damage, or deterioration in the rear wheel 22 that is the non-pneumatic tire are detected by the metal wire 31a and the sensor 31b and the reporting section 33 reports the occurrence, a user or the like can easily notice the troubles such as scratching, damage, degradation, or the like, generated on the non-pneumatic tire. Accordingly, it is possible to take measures to replace parts before the bicycle 1 is unable to travel or to repair them in an initial stage of the trouble to extend a lifetime thereof.

### (Second embodiment)

Next, while a second embodiment according to the present invention will be described, a basic configuration is the same as that of the first embodiment. For this reason, the same components are designated by the same reference numerals, descriptions thereof will be omitted, and only different points will be described.

In the embodiment, as shown in Fig. 3, a concave section 32 is formed in the outer tube 4. A portion of the outer tube 4 in which the concave section 32 is formed has a thickness that is smaller than that of the other portion thereof. That is, a portion of the outer tube 4 in which the concave section 32 is formed is a weakened section having a strength that is lower than that of the other portion of the outer tube 4.

When degradation advances throughout the outer tube 4, a state of the concave section 32 varies more significantly than a state of the other area. Accordingly, when the state of the concave section 32 is recognized, a user or the like can precisely determine a level of degradation of the entire outer tube 4. Accordingly, the concave section 32 functions as a reporting section configured to report occurrences of deterioration in the outer tube 4.

Further, the concave section 32 shown in Fig. 3 is an example of the weakened section and other types thereof may be employed for the weakened section. For example, the concave section 32 may be provided in the connecting members 3, the inner tube 6, the wheel 2, and the like. Alternatively, when the thickness of a specified connecting member 3 among the plurality of connecting members 3 is smaller than that of another connecting member 3, the specified connecting member 3 may be the weakened section.

According to the embodiment, when a user or the like recognizes a state of the weakened section, a level of the degradation of the entire the rear wheel 22 that is the non-pneumatic tire can be easily determined. Accordingly, it is possible to take measures to repair the rear wheel 22 in the initial stage of the degradation to extend a lifetime thereof or to replace the degraded parts.

Further, the technical scope of the present invention is not limited to the embodiment and various changes may be made without departing from the spirit of the present invention.

For example, a chemical light may be buried in at least some of the inner tube 6, the connecting members 3, the outer tube 4 and the wheel 2. In this case, for example, when a scratch, damage, or degradation occurs in a portion in which the chemical light is buried, the portion is deformed and emits light. Accordingly, the portion in which the chemical light is buried functions as a reporting section configured to report occurrence of scratching, damage, or deterioration in the non-pneumatic tire. Further, in this case, the detection section may not be provided in the non-pneumatic tire.

Alternatively, a colored liquid may be enclosed in at least a part of the inner tube 6, the connecting members 3, the outer tube 4, and the wheel 2. In this case, for example, when the scratch, damage, or degradation occurs on the portion in which the liquid is enclosed, the liquid leaks from the portion. Accordingly, the portion in which the liquid is enclosed functions as the reporting section configured to report occurrences of scratching, damage, or deterioration in the non-pneumatic tire. Further, in this case, the detection section may not be provided on the non-pneumatic tire.

In addition, in the embodiment, while the front wheel 21 and the rear wheel 22 having the same configuration have been described, the front wheel 21 and the rear wheel 22 may have different configurations. For example, the detection section or the reporting section may be provided on at least one of the front wheel 21 and the rear wheel 22.

In addition, in the embodiment, while the bicycle 1 including the front wheel 21 and the rear wheel 22 that are non-pneumatic tires has been described, the non-pneumatic tire may be used for a vehicle such as an automobile, a two-wheeled vehicle, or the like, in addition to a bicycle.

In addition, the components in the above-mentioned embodiment may be appropriately substituted with known components and the above-mentioned embodiments or variants may be appropriately combined with each other without departing from the spirit of the present invention.

For example, the front wheel 21 or the rear wheel 22 including the metal wire 31a, the sensor 31b and the concave section 32 may be employed by combining the first embodiment and the second embodiment.

### [Industrial Applicability]

It is possible for users or the like to easily notice troubles such as scratching, damage, degradation, or the like, occurring in a non-pneumatic tire.

### [Reference Signs List]

1 Bicycle (vehicle)
2 Wheel
3 Connecting member
4 Outer tube
5 Tread member
6 Inner tube
10 Vehicle body
21 Front wheel (non-pneumatic tire)
22 Rear wheel (non-pneumatic tire)
31a Metal wire (detection section)
31b Sensor (detection section)
32 Concave section (weakened section)
33 Reporting section (reporting section)

## Claims

1. A non-pneumatic tire comprising an inner tube attachable to an axle, an outer tube configured to surround the inner tube from an outer side in a tire radial direction, and an elastically deformable connecting member configured to connect the inner tube and the outer tube to each other, the non-pneumatic tire comprising at least one of:
a detection section configured to detect occurrences of scratching, damage, or deterioration in the non-pneumatic tire; and
a reporting section configured to report occurrences of scratching, damage, or deterioration in the non-pneumatic tire.

2. The non-pneumatic tire according to claim 1, wherein the reporting section is a weakened section provided in a portion of at least one of the inner tube, the outer tube and the connecting member, and having a lower strength than that of other areas.

3. A two-wheeled vehicle comprising: the non-pneumatic tire according to claim 1 or 2; and a vehicle body including the axle.
